# DEMANDE DE BREVET EUROPEEN

(11) **EP 0 921 031 A1**
(43) Date de publication de la demande: **09.06.1999**
(21) Numéro de dépôt: 98460052.8
(22) Date de dépôt: 01.12.1998
(51) Int. Cl.: B60N 2/28

(54) **Siège inclinable pour enfant, et procédé de fabrication correspondant**

(30) Priorité: 02.12.1997 FR 9715438
(71) Demandeur: Ampafrance, 49309 Cholet Cedex (FR)
(72) Inventeur: Surot, Patrick, 49300 Cholet (FR)
(74) Mandataire: Vidon, Patrice

(57) **Abrégé**

L'invention concerne un siège inclinable pour enfant, notamment destiné à être utilisé dans un véhicule, du type comprenant deux éléments, un socle fixe (12) et une assise (11) susceptible de prendre au moins deux positions extrêmes sur ledit socle (12), par coulissement d'au moins un coulisseau, formé dans un premier desdits éléments, à l'intérieur d'au moins une rainure correspondante formée dans le second desdits éléments,
caractérisé en ce qu'il comprend au moins une pièce d'assemblage et de guidage traversant lesdits éléments au niveau dudit ou desdits coulisseaux, perpendiculairement à l'axe de coulissement et parallèlement au plan de coulissement,
la ou lesdites pièces d'assemblage et de guidage étant solidaires de l'un desdits éléments et pouvant se déplacer, entre deux positions correspondant auxdites positions extrêmes de l'assise, dans des évidements aménagés dans l'autre desdits éléments.

## Description

Le domaine de l'invention est celui des sièges pour enfant. Plus précisément, l'invention concerne les sièges inclinables, destinés en particulier, mais non exclusivement, à une utilisation dans un véhicule.

Classiquement, de tels sièges inclinables sont conçus en deux parties. L'une est fixe, et prévue par exemple pour être solidarisée au fauteuil d'une automobile, à l'aide d'une ceinture de sécurité. L'autre partie est mobile, par rapport à la première partie, de façon à permettre d'incliner le siège. On appelle par la suite socle la partie fixe, et assise la partie mobile.

L'assise se déplace par rapport au socle entre une position dans laquelle l'enfant est assis (dite position assise) et une position dans laquelle l'enfant est couché (dite position couchée). En général, une ou plusieurs positions intermédiaires sont également prévues.

La fabrication de tels sièges est soumise à de nombreuses contraintes, notamment lorsqu'ils sont destinés à être utilisés dans une automobile. Ils doivent respecter diverses règles ayant trait à la solidité, et à la sécurité de l'enfant transporté. En conséquence, ils sont généralement complexes et coûteux à fabriquer. Par ailleurs, ils sont souvent peu pratiques à manipuler.

Une première technique connue consiste à mettre en oeuvre un système à crémaillère, éventuellement incurvée. Le socle est solidaire d'une première pièce formant glissière, et présentant plusieurs crans d'arrêt, correspondant aux diverses positions que peut prendre le siège. L'assise comprend un élément coulissant dans la glissière, et des moyens mobiles de solidarisation, coopérant avec les crans d'arrêt. Des moyens de verrouillage/déverrouillage sont prévus, pour permettre les changements de positions.

Cette technique présente de nombreux inconvénients, liés essentiellement au nombre de pièces impliquées, et à leur montage. Les éléments formant la crémaillère doivent être rapportés sur le socle ou sur l'assise, mis en place avec précision, fixés au socle ou à l'assise, puis assemblés pour former le siège complet.

Chaque élément de la crémaillère a dû, bien sûr, être préalablement fabriqué indépendamment, dans un matériau prédéterminé, et toujours avec une précision importante, permettant d'assurer un bon coulissement tout en respectant les conditions de sécurité.

En conséquence, la fabrication d'un tel siège présente un coût de revient très élevé.

Une seconde technique connue permet de réduire les coûts de fabrication. Elle consiste à former directement dans la masse du socle et de l'assise des glissières et des éléments coulissants dans celles-ci. Il est clair que cette méthode est plus économique, sur le plan matériel. Toutefois, elle s'avère difficile à mettre en oeuvre efficacement.

En effet, il est peu aisé de fabriquer des pièces monoblocs (socle ou assise) selon des techniques telles que l'extrusion-soufflage avec une précision suffisante pour la réalisation d'éléments coulissants de forme complexe (coulisseau en "L" ou en "T", et rainure de forme complémentaire, pour empêcher que les deux éléments se désolidarisent.

Il est donc nécessaire de prévoir un ajustage spécifique à chaque siège et, d'une façon générale, le coulissement reste de qualité médiocre. De plus, la solidité de tels éléments coulissants est limitée.

L'invention a notamment pour objectif de pallier ces divers inconvénients de l'état de la technique.

Plus précisément, un premier objectif de l'invention est de fournir un siège inclinable pour enfant, et une technique de fabrication correspondante, qui présentent des coûts de fabrication, et donc des coûts de revient, réduits.

En conséquence, l'invention a pour objectif de fournir a tel siège inclinable dont le nombre de pièces, et la complexité de ces dernières, sont limitées, par rapport aux sièges connus.

Un autre objectif de l'invention est de fournir un procédé de fabrication de tels sièges qui soit simple, efficace et rapide. Notamment, l'invention a pour objectif de fournir un tel procédé, qui puisse être mis en oeuvre aisément, en temps masqué.

L'invention a également pour objectif de fournir de tels sièges inclinables, présentant de bonnes qualités de coulissement, sans risque de frottement ou de blocage, sans qu'un ajustage soit nécessaire.

Encore un autre objectif de l'invention est de fournir un tel siège inclinable, dont la solidité est renforcée, et donc dont la sécurité pour l'enfant transporté est améliorée.

Ces objectifs, ainsi que d'autres qui apparaîtront par la suite, sont atteints selon l'invention par un siège inclinable pour enfant, notamment destiné à être utilisé dans un véhicule, du type comprenant deux éléments, un socle fixe et une assise susceptible de prendre au moins deux positions extrêmes sur ledit socle, par coulissement d'au moins un coulisseau, formé dans un premier desdits éléments, à l'intérieur d'au moins une rainure correspondante formée dans le second desdits éléments, ledit siège comprenant au moins une pièce d'assemblage et de guidage traversant lesdits éléments au niveau dudit ou desdits coulisseaux, perpendiculairement à l'axe de coulissement et parallèlement au plan de coulissement, la ou lesdites pièces d'assemblage et de guidage étant solidaires de l'un desdits éléments et pouvant se déplacer, entre deux positions correspondant auxdites positions extrêmes de l'assise, dans des évidements aménagés dans l'autre desdits éléments.

Ainsi, la solidarisation des deux éléments et le guidage du coulissement sont assurés de façon simple et sûre. Le nombre de pièces nécessaires est très réduit, et le montage de ces dernières est simple et rapide. Aucun ajustement n'est nécessaire.

De plus, la solidité du siège est renforcée, pas les mêmes moyens.

Selon un mode de réalisation de l'invention, ledit ou lesdits évidements sont réalisés dans ledit socle, la ou lesdites pièces d'assemblage et de guidage étant solidaires de ladite assise.

Toutefois, il est clair que les rôles du socle et de l'assise peuvent être inversé.

De façon avantageuse, ledit siège comprend deux pièces d'assemblage et de guidage, placées respectivement au niveau de la partie avant et de la partie arrière dudit ou desdits coulisseaux.

Selon d'autres modes de réalisation, une seule, ou plus de deux pièces d'assemblage et de guidage peuvent être envisagées.

Dans un mode de réalisation préférentiel de l'invention, lesdites pièces d'assemblage et de guidage sont des broches.

Il est alors facile de les mettre en place, à force.

Préférentiellement, ledit siège comprend des moyens de verrouillage, immobilisant ladite assise dans ledit socle en mode verrouillé, et permettant le coulissement de ladite assise sur ledit socle en mode déverrouillé.

De façon avantageuse, lesdits moyens de verrouillage comprennent au moins un élément monté pivotant sur l'un desdites pièces d'assemblage et de guidage. On exploite ainsi les éléments disponibles, ce qui permet de limiter le nombre de pièces mises en oeuvre et de simplifier le montage.

Dans ce cas, lesdits moyens de verrouillage peuvent comprendre des moyens de rappel, ramenant ledit élément monté pivotant dans une position dans laquelle au moins un pion coopère avec au moins une encoche pour immobiliser ladite assise sur ledit socle.

Selon un mode de réalisation préférentiel, le siège de l'invention peut prendre au moins trois positions dans lesquelles lesdits moyens de verrouillage peuvent être verrouillés, à savoir lesdites positions extrêmes et au moins une position intermédiaire.

L'invention concerne également le procédé de fabrication d'un tel siège. Ce procédé comprend notamment les étapes suivantes :
- mise en place de ladite assise sur ledit socle ;
- introduction à force, à l'aide d'un vérin par exemple, de la ou desdites pièces d'assemblage et de guidage dans ledit socle et ladite assise.

On constate que ce procédé est très simple et très rapide. Il peut de plus être mis en oeuvre en temps masqué, les étapes étant indépendantes dans le temps.

De façon avantageuse, ledit socle et/ou ladite assise est obtenu par extrusion-soufflage.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1A et 1B présentent un siège inclinable selon l'invention, respectivement en position assise et en position couchée ;
- les figures 2A et 2B illustrent les éléments du siège des figures 1A et 1B selon l'invention, à savoir l'assise, vue de dessous (figure 2A) et le socle, vu de dessus, en perspective (figure 2B) ;
- la figure 3 présente les éléments des figures 2A et 2B, une fois montés, vus de dessous ;
- la figure 4 illustre les moyens de verrouillage du siège de l'invention figures 2 et 3 ;
- la figure 5 est un synoptique simplifié du procédé de fabrication selon l'invention.

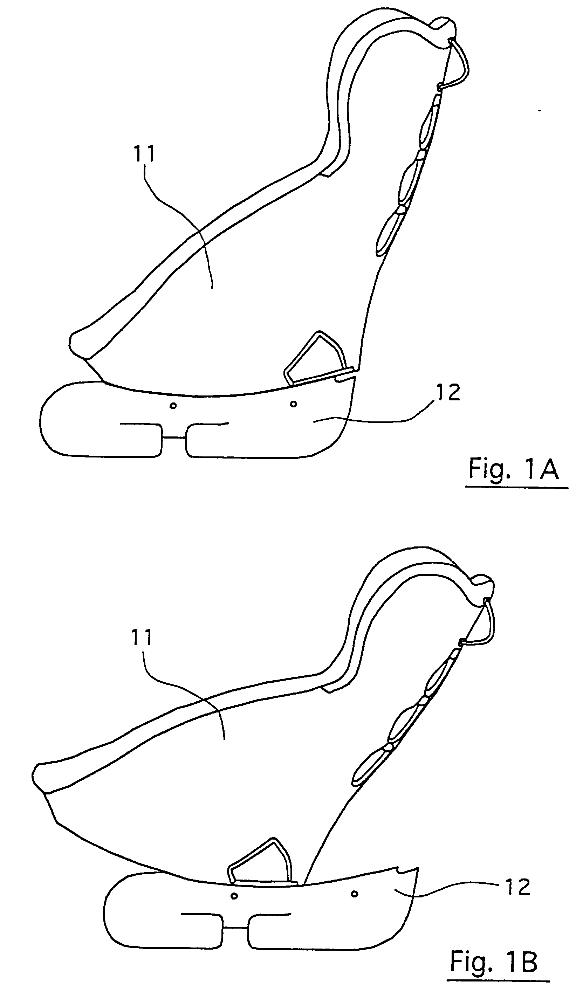

Les figures 1A et 1B illustrent donc un siège inclinable selon l'invention, vu de côté. Il comprend une assise 11, et un socle 12. Ce dernier peut être solidarisé au siège d'un véhicule automobile.

L'assise 11 peut coulisser sur le socle 12, entre une position assise (figure 1A) et une position couchée (figure 1B). Bien sûr, une ou plusieurs positions intermédiaires peuvent être prévues.

Le coulissement de l'assise 11 est contrôlé par des moyens de verrouillage. Au repos, ces moyens de verrouillage empêchent tout mouvement de l'assise par rapport au socle. En agissant sur ces moyens de verrouillage, on rend possible le mouvement relatif de l'assise par rapport au socle.

L'invention ne concerne pas de tels sièges en général, mais un mode de construction particulièrement avantageux, basé sur l'utilisation de pièces d'assemblage, telles que des broches, pour assurer l'assemblage de l'assise et du socle et le guidage de l'assise sur le socle.

Dans le mode de réalisation décrit par la suite, les pièces d'assemblage de l'invention appelés broches par la suite sont solidaires de l'assise. Il convient de noter toutefois que les rôles des deux éléments (socle et assise) peuvent aisément être inversés, les pièces d'assemblage étant alors solidaires du socle.

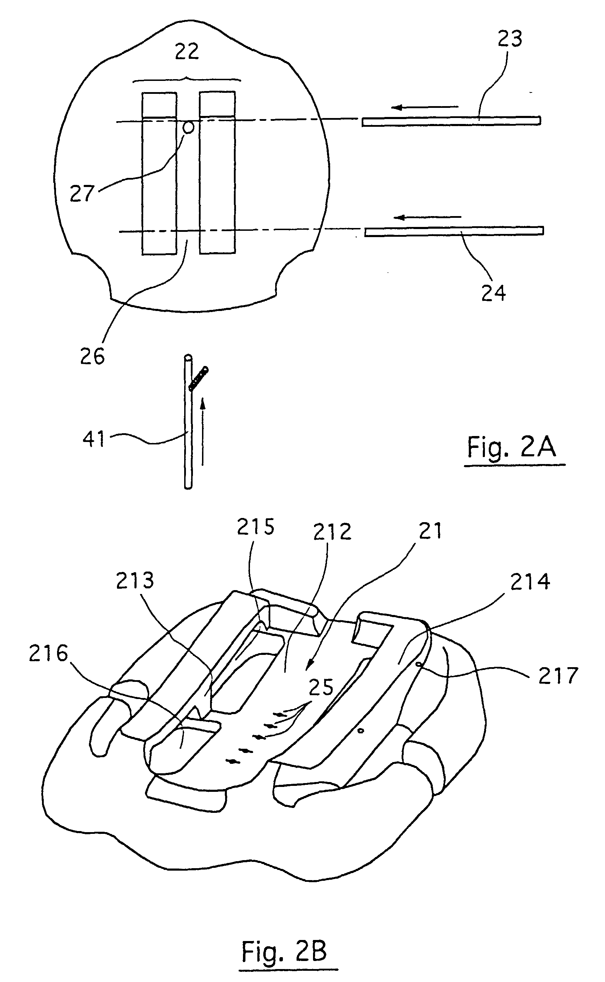

La figure 2A présente l'assise 11, vue de dessous, et la figure 2B illustre le socle 12.

Ainsi que cela est illustré sur ces figures 2A et 2B, le socle 12 présente une rainure principale 21, formant un plateau incurvé. L'assise 11 dispose d'un coulisseau 22 correspondant. Les formes des rainures 21 et coulisseau 22 sont complémentaires et choisies de façon à permettre une fabrication aisée, limitant les risques de frottement. Un jeu léger est d'ailleurs acceptable, cette glissière ayant un rôle de guidage, mais non de solidarisation.

La forme du plateau 212 définit un plan de coulissement incurvée permettant une mise en place adaptée de l'assise, quelle que soit la position requise.

Il est bien sûr possible de prévoir deux, voire plus, glissières parallèles, présentant les mêmes caractéristiques de guidage que celle de la glissière formée par le coulisseau 22 et la rainure 21.

Chacun des flancs 213 et 214 de la rainure 21 présente, sur sa face interne, deux évidements de maintien et de guidage 215 et 216. Des broches 23 et 24 sont introduites au travers des éléments formant la glissière, via des ouvertures 217 prévues à cet effet dans les flancs de la rainure 21 et dans le coulisseau 22.

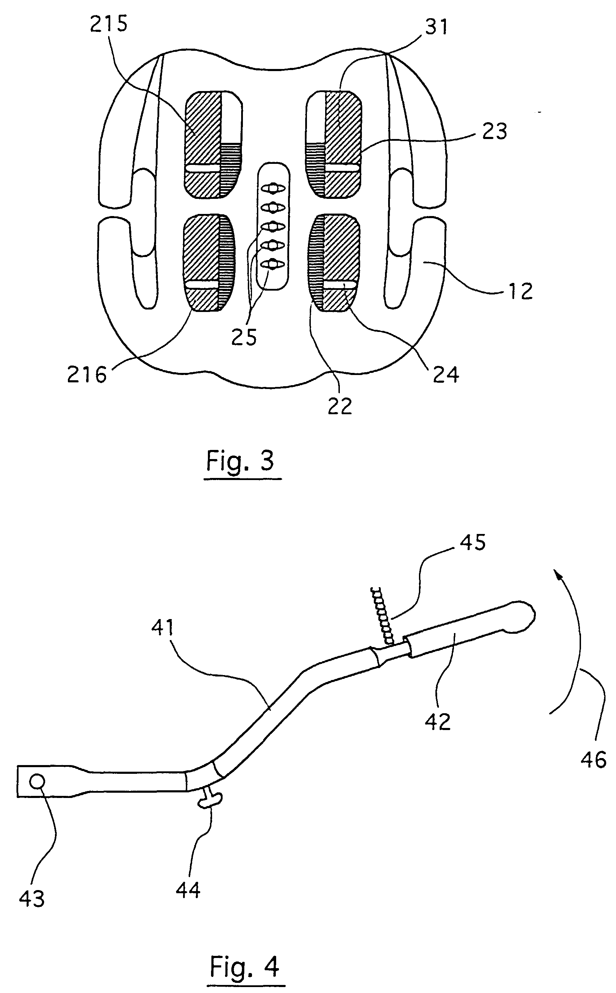

Les broches 23 et 24 sont fixes par rapport au coulisseau, donc à l'assise. En revanche, les extrémités de ces broches 23 et 24 peuvent se déplacer dans les évidements 215 et 216 (donc dans le socle), comme cela apparaît plus clairement en figure 3. La figure 3 montre en effet le siège de l'invention, une fois monté, vu de dessous. Quatre ouvertures ménagées dans le socle permettent de distinguer les éléments de l'invention.

Le coulisseau 22 est solidarisé au socle 12 par les broches 23 et 24. La partie centrale de ces tiges traverse le coulisseau. Leurs extrémités peuvent se déplacer longitudinalement dans les évidements 216, 217. Elles sont en revanche maintenues dans les autres directions, notamment vers le haut, par la partie supérieure 31 des évidements.

Les broches 23 et 24 assurent donc les rôles suivants :
- solidarisation, ou assemblage du socle et de l'assise ;
- guidage et contrôle du coulissement de l'assise sur le socle, dans les limites définies par les évidements ;
- renforcement de la solidité générale du siège inclinable, et en particulier de la zone de solidarisation.

Il est à noter que la ou les pièces traversantes assurant les fonctions de guidage et d'assemblage ne sont pas forcément des broches de section circulaire. Elles peuvent en effet être de section quelconque, et éventuellement de section variable.

Par ailleurs, le nombre de pièces traversantes n'est pas fixe. Cette pièce peut être unique (notamment lorsque la section n'est pas circulaire). Inversement, on peut prévoir plus de deux pièces, pour renforcer la solidité.

Selon un autre mode de réalisation, on peut prévoir que les pièces traversantes soient solidaires des flancs de la glissière. Dans ce cas, des lumières de guidage sont formées dans le coulisseau, pour permettre le déplacement relatif du siège par rapport au socle.

Le siège de l'invention peut donc prendre deux positions stables extrêmes, correspondant aux limites des évidements 215 et 216, et, avantageusement, une ou plusieurs positions stables intermédiaires prédéfinies. Ainsi, dans le mode de réalisation des figures 2A et 3, cinq positions sont prévues, correspondant aux encoches 25.

Des moyens de verrouillage et de déverrouillage sont prévus, de façon que :
- en mode verrouillé, l'assise est maintenue dans une des positions stables prédéterminées, de façon fixe et sûre ;
- en mode déverrouillé, il est possible de faire coulisser l'assise sur le socle pour changer de position.

Plusieurs techniques peuvent être envisagées pour réaliser de tels moyens de verrouillage et de déverrouillage. La figure 4 illustre un mode de réalisation avantageux, particulièrement simple à mettre en oeuvre, et donc peu coûteux.

Une pièce de commande 41, se terminant à l'une de ses extrémités par une poignée 42 accessible à l'utilisateur, est placée dans une rainure 26 (figure 2) définie dans le coulisseau. L'autre extrémité de cette pièce de commande 41 présente une ouverture 43 dans laquelle peut pénétrer une broche de guidage et d'assemblage 24. Ainsi, la pièce 41 peut pivoter autour de la broche 24.

Un pion 44 (se terminant par une bobine) est monté sur la pièce 41, de façon qu'il déborde de la rainure 26. Ce pion 44 peut coopérer avec les encoches 25 (figure 2B) formées à la surface de la rainure 21 du socle. Chaque encoche 25 correspond à l'une des positions stables du siège.

Des moyens de rappel 45 sont prévus, qui ramènent et maintiennent le pion 44 dans l'une des encoches 25. Ces moyens de rappel 48 sont maintenus dans un logement 27 prévu à cet effet dans l'assise 11.

Le fonctionnement est donc le suivant. Pour déverrouiller le siège, on lève la poignée 42 (flèche 46), ce qui comprime le ressort 45, et extrait le pion 44 de son encoche. Il est alors possible de faire coulisser l'assise sur son socle. Lorsque l'on relâche la poignée 42, le ressort 45 ramène le pion 44 à l'intérieur d'une encoche 25. S'il ne se trouve pas en face d'une telle encoche, il suffit de faire coulisser légèrement l'assise dans un sens ou dans l'autre, jusqu'à ce que le pion 44 s'enclenche dans une encoche 25.

La forme de la pièce de commande 41 est définie de façon que, notamment, son mouvement ne soit pas perturbé par la seconde broche 23 de guidage et d'assemblage.

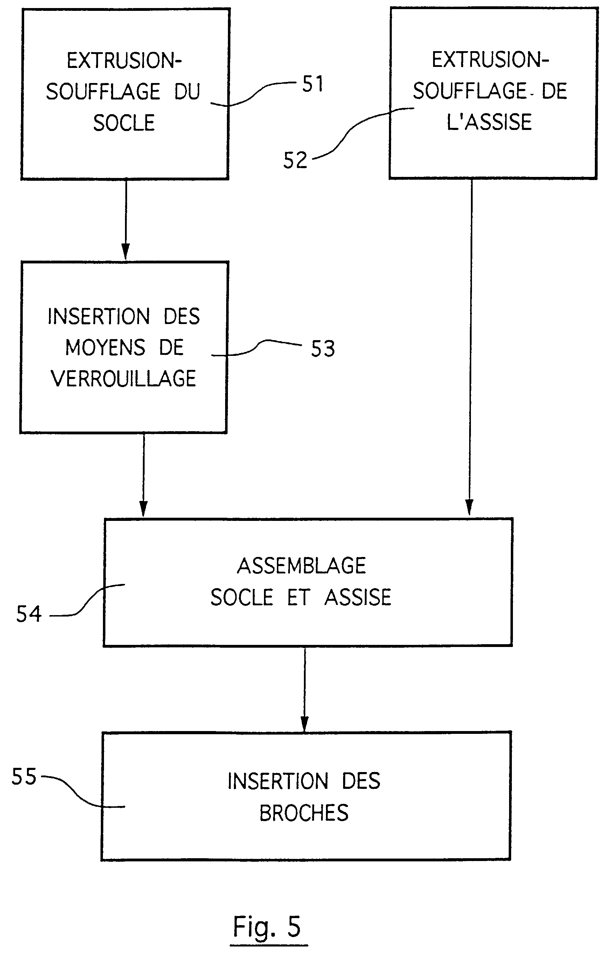

Le siège ainsi obtenu est donc simple, efficace et solide. On va maintenant voir que sa fabrication est également peu coûteuse et rapide, ainsi que cela est illustré par le synoptique de la figure 5.

On fabrique tout d'abord, éventuellement simultanément, le socle (51) et l'assise (52). Plusieurs modes de fabrication sont envisageables. Avantageusement, les deux éléments peuvent être obtenus par extrusion soufflage.

On met ensuite en place dans l'emplacement prévu à cet effet dans le socle les moyens de verrouillage/déverrouillage (53), puis on assemble par simple emboîtage (54) le socle et l'assise.

Enfin, on insère (55) les moyens de guidage et d'assemblage Ceux-ci sont introduits à force, par exemple à l'aide d'un vérin. Le montage du siège est alors terminé.

Il est à noter que les étapes décrites ci-dessus peuvent être mises en oeuvre en temps masqué. Notamment, l'insertion des moyens de guidage et d'assemblage peuvent être insérés pendant que l'on produit les socles et assises suivants.

## Revendications

1. Siège inclinable pour enfant, notamment destiné à être utilisé dans un véhicule, du type comprenant deux éléments, un socle fixe et une assise susceptible de prendre au moins deux positions extrêmes sur ledit socle, par coulissement d'au moins un coulisseau, formé dans un premier desdits éléments, à l'intérieur d'au moins une rainure correspondante formée dans le second desdits éléments, caractérisé en ce qu'il comprend au moins une pièce d'assemblage et de guidage traversant lesdits éléments, au niveau dudit ou desdits coulisseaux, perpendiculairement à l'axe de coulissement et parallèlement au plan de coulissement, de façon à maintenir lesdits éléments assemblés, la ou lesdites pièces d'assemblage et de guidage étant solidaires de l'un desdits éléments et pouvant se déplacer, entre deux positions correspondant auxdites positions extrêmes de l'assise, dans des évidements aménagés dans l'autre desdits éléments.

2. Siège inclinable selon la revendication 1, caractérisé en ce que ledit ou lesdits évidements sont réalisés dans ledit socle, la ou lesdites pièces d'assemblage et de guidage étant solidaires de ladite assise.

3. Siège inclinable selon l'une quelconque des revendications 1 et 2, caractérisé en ce qu'il comprend deux pièces d'assemblage et de guidage, placées respectivement au niveau de la partie avant et de la partie arrière dudit ou desdits coulisseaux.

4. Siège inclinable selon l'une quelconque des revendications 1 à 3, caractérisé en ce que lesdites pièces d'assemblage et de guidage sont des broches.

5. Siège inclinable selon l'une quelconque des revendications 1 à 4, caractérisé en ce qu'il comprend des moyens de verrouillage, immobilisant ladite assise dans ledit socle en mode verrouillé, et permettant le coulissement de ladite assise sur ledit socle en mode déverrouillé.

6. Siège inclinable selon la revendication 5, caractérisé en ce que lesdits moyens de verrouillage comprennent au moins un élément monté pivotant sur l'un desdites pièces d'assemblage et de guidage.

7. Siège inclinable selon la revendication 6, caractérisé en ce que lesdits moyens de verrouillage comprennent des moyens de rappel, ramenant ledit élément monté pivotant dans une position dans laquelle au moins un pion coopère avec au moins une encoche pour immobiliser ladite assise sur ledit socle.

8. Siège inclinable selon l'une quelconque des revendications 5 à 7, caractérisé en ce qu'il comprend au moins trois positions dans lesquelles lesdits moyens de verrouillage peuvent être verrouillés, à savoir lesdites positions extrêmes et au moins une position intermédiaire.

9. Procédé de fabrication d'un siège inclinable pour enfant selon l'une quelconque des revendications 1 à 8, caractérisé en ce qu'il comprend les étapes suivantes :
- mise en place de ladite assise sur ledit socle;
- introduction à force de la ou desdites pièces d'assemblage et de guidage dans ledit socle et ladite assise.

10. Procédé de fabrication selon la revendication 9, caractérisé en ce que ledit socle et/ou ladite assise est obtenu par extrusion-soufflage.
